# EUROPEAN PATENT APPLICATION

(11) **EP 1 219 849 A2**
(43) Date of publication of application: **03.07.2002**
(21) Application number: 01310753.7
(22) Date of filing: 21.12.2001
(51) Int. Cl.: F16D 37/00, F16D 37/02

(54) **Method to use a magneto-rheological or electro-rheological substance by using a continuous minimal low threshold power supply**

(30) Priority: 29.12.2000 US 752051
(71) Applicant: Visteon Global Technologies, Inc., Dearborn, Michigan 48126-2490 (US)
(72) Inventor: Szalony, Norman, Brighton, MI 48116 (US)
(74) Representative: McLean, Robert Andreas

(57) **Abstract**

A method for modifying a porous mechanical component by using an ER or MR substance including the steps of providing at least one porous metal component having a porosity sufficient to receive the MR substance within a plurality of pores, and impregnating the component with the MR substance. The movement of the MR substance due to outside forces relative to the component is then resisted by applying a constant minimal modulating charge to the MR substance and the porous metal component.

## Description

### FIELD OF THE INVENTION

The invention relates generally to the field of Electro-Rheological (ER) and Magneto-Rheological (MR) fluids and powders, specifically methods of using ER/MR fluids and powders in mechanical and electrical devices.

### BACKGROUND OF THE INVENTION

ER and MR fluids and powders are substances that rely on a magnetic capable media compounded in a way that allows the substance to change form from a liquid or powder state to a rigid, solid state. These materials are formed from micron-sized, magnetizable particles called fines, suspended in oil or other media. ER and MR powders consist solely of magnetizable particles.

ER and MR fluids are very similar in their operation. The main difference is that ER fluids are responsive to an electric field and MR fluids are reactive to a magnetic field. However, MR fluids do have many advantages over ER fluids, and these will be discussed later.

ER and MR fluids are typically made up of three components: the magnetic particles, a carrier fluid, and a dispersant of some sort. The magnetic particles in ER and MR fluids are called magnetic fines. These fines are normally very small iron particles, on the order of 1-10 µm. The size of the particles may vary, but it is known that while larger particles can give the ER or MR fluid a higher yield strength and therefore a greater binding capacity, larger particles also tend to settle out from the fluid quite easily. Smaller particles do not have as much of a settling out problem, but they are more temperature sensitive and tend to "cake up" more easily, which affects the fluidity of the substance. This problem of particles settling out and caking up has been addressed in a number of patents. For example, U.S. Pat. No. 5,645,752 discloses an MR fluid utilizing a thixotropic network to stabilize the particles and prevent some settling out. Methods as shown in the '752 patent allow for the use of larger particles in the fluid and thus allow for a greater yield strength. However, the need for greater yield strength is always growing, and particle size can only be increased to a certain level. A new method for increasing the strength of both ER and MR fluid is still needed.

Carrier fluids are the fluids in which the magnetic fines are suspended. In the case of an ER or MR powder, there is no fluid; the particles themselves make up the entire substance. In ER and MR fluids, the carrier fluid is normally an inexpensive, temperature stable, non-reactive substance, preferably with a high boiling point. Commonly used carrier fluids are silicone or hydrocarbon oil. The most important features of a carrier fluid are its resistance to temperature changes and the fact that it should not cause sealing problems in the mechanism in which the ER or MR fluid is used.

The last component in most ER and MR fluids is a dispersant. The dispersant prevents some settling out and caking up of the magnetic particles. Normally, structured silica, fibrous carbon, or a number of various polymers are used to perform this function.

In their liquid form, ER and MR fluids have a consistency much like common motor oil. However, when an electric charge or magnetic field is applied, the fluids change form, becoming rigid and able to bond surfaces together. This rigid bonding mechanism results from a dipole moment introduced on the magnetic particles in the fluid from the electric charge or magnetic field. The particles form chains, aligning parallel to the electric charge or magnetic field. The strength of the bonding mechanism depends on the strength of the charge or field applied to the fluid and the size of the particles. The change in viscosity of the fluid takes place in a few milliseconds. ER and MR powders operate in the same manner, changing from a powder to a rigid form. MR fluids typically exhibit much stronger yield strengths than do ER fluids. MR fluids are also more resistant to temperature changes and have a high tolerance to impurities such as water. MR fluids can also be activated using a much lower voltage power supply. ER fluids require high voltage (near 5,000 volts) to operate, and this need can cause design and safety problems. For purposes of the present disclosure, discussion herein of the terms "ER and/or MR fluids" is also meant to refer to equivalent ER or MR substances, such as powders.

ER and MR fluids have been examined in the past as a way to "lock up" or stop a rotating device such as clutch plates. U.S. Pat. No. 2,575,360 describes such an application. The binding properties of the ER or MR fluid could increase the friction between two clutch plates quickly and easily, without having to actually change the position of the clutch plates. Instead of pressing the clutch plates against each other to bind them together, the ER or MR fluid could simply be activated and the solid form would bind the plates together.

However, a problem with using ER and MR fluids as a medium in a rotating device such as a clutch is that the magnetic fines tend to centrifuge to the outer diameter of the rotating components. In a device where the fluid is required to act as a lubricant between the components, the movement of the fluid can cause problems since the medium is not covering the entire surface of the parts. But most importantly, the non-uniformity of the dispersion of the magnetic fines affects the holding capacity of the fluid and the components will slip rather than bind. ER and MR powders also suffer from the non-uniformity problem.

Another problem with the centrifugation of the fines to the outer diameter of the parts is that it facilitates the evaporation of the film layer created by the fluid. When the fluid evaporates, the lubrication film gap may be partially or entirely lost and the parts could come in contact with each other, resulting in friction and damage Plus, the less of a film layer that is present between the components, the more chance of slippage when the binding characteristics of the ER or MR fluid are activated.

The prior art method of retaining a homogenous film layer is to use standpipes and balance dams to retain the fluid. Rapid refilling is also an option. However, these methods result in lag time while the volume of fluid is being refilled or is traveling back to its original, homogenous position. Since there is lag time, there is no instantaneous on/off capacity.

### BRIEF SUMMARY OF THE INVENTION

The present invention may be embodied in a method for modifying a porous mechanical component by using an ER or MR substance. Preferably, the ER or MR substance is a fluid, but alternatively it is possible to perform the method using an ER or MR powder.

In a first embodiment of the invention, a method for maintaining a quantity of an MR substance in a substantially static position in conjunction with any mechanism is provided. The method includes the steps of providing at least one porous metal component having a porosity sufficient to receive the MR substance within a plurality of pores, and impregnating the component with the MR substance. The movement of the MR substance due to outside forces relative to the component is then resisted by applying a constant minimal modulating charge to the MR substance and the porous metal component.

In a second embodiment of the invention, a method for accelerating the binding properties of an ER substance in any mechanism is provided. The method includes the steps of providing at least two porous metal components having a porosity sufficient to receive the ER substance within a plurality of pores, and impregnating the components with the ER substance. A constant minimal modulating charge is applied to the components and the ER substance. The charge is then increased to activate the binding characteristics of the ER substance.

In a third embodiment of the invention, a method for maintaining a homogenous film layer of an MR substance between the components of a mechanism is provided. The method includes the steps of providing at least two porous metal components having a porosity sufficient to receive the MR substance within a plurality of pores, and impregnating the components with the MR substance. A quantity of the MR substance is then introduced between the components and a constant minimal modulating charge is applied to the MR substance and the components.

In a fourth embodiment of the invention, a method for accelerating the binding properties of an MR substance in any mechanism is provided. The method includes the steps of providing at least two porous metal components having a porosity sufficient to receive the MR substance within a plurality of pores, and impregnating the components with the MR substance. A constant minimal modulating charge is applied to the components and the MR substance. A magnetic field is then applied to the MR substance and the components to activate the binding characteristics of the MR substance.

In a fifth embodiment of the invention, a method for maintaining a quantity of an ER substance in a substantially static position in conjunction with any mechanism is provided. The method includes the steps of providing at least one porous metal component having a porosity sufficient to receive the ER substance within a plurality of pores, and impregnating the component with the ER substance. The movement of the ER substance due to outside forces relative to the component is then resisted by applying a constant minimal modulating charge to the ER substance and the porous metal component.

In a sixth embodiment of the invention, a method for maintaining a homogenous film layer of an ER substance between the components of a mechanism is provided. The method includes the steps of providing at least two porous metal components having a porosity sufficient to receive the ER substance within a plurality of pores, and impregnating the components with the ER substance. A quantity of the ER substance is then introduced between the components and a constant minimal modulating charge is applied to the ER substance and the components.

This method provides many advantages over the prior art. By using this method, two rotating components can be quickly and easily bound together simply by slightly adjusting the electric charge. This allows for near instantaneous on/off capacity in the mechanism. Additionally, by applying a minimal modulating charge, the ER or MR fluid is kept in a nearly homogenous position in the mechanism. This cuts down on the evaporation of the fluid and allows for rapid on/off capacity. Plus, there is no need to refill the mechanism with the fluid because the fluid stays in one position. Standpipes and balance dams are no longer necessary. The cost is reduced and the design is simplified when using this method.

It is to be understood that both the preceding summary and the following detailed description are intended to be exemplary and are intended to provide a further explanation of the invention claimed. The invention will best be understood by reference to the following detailed description read in conjunction with the accompanying drawings.

### BRIEF DESCRIPTION OF SEVERAL VIEWS OF THE DRAWINGS

FIG. 1 shows an enlarged view of the interaction of the particles in an ER or MR fluid without an electric charge or magnetic field applied and then with an electric charge or magnetic field applied;
FIG. 2 shows an enlarged view of a cross-section of the structure of a porous component that may be utilized in accordance with the present invention;
FIG. 3 shows a cross-section of the present method of two porous components impregnated with ER or MR fluid and a layer of ER or MR fluid between them in an inactivated state that may be utilized in accordance with the present invention;
FIG. 4 is the same as FIG. 3, but with a low-level electric charge or magnetic field applied, showing the interaction of the particles with the pores of the components;
FIG. 5 is a schematic example of the connection of an electric circuit to the components from FIGS. 3 and 4 with an electric charge or magnetic field applied;
FIG. 6 shows a basic example of two rotating components that may implement another embodiment of the present invention;
FIG. 7 shows the position of the magnetic fines in a prior art rotating mechanism such as FIG. 6; and
FIG. 8 shows the position of the magnetic fines in a rotating mechanism utilizing the present invention.

### DETAILED DESCRIPTION OF THE INVENTION

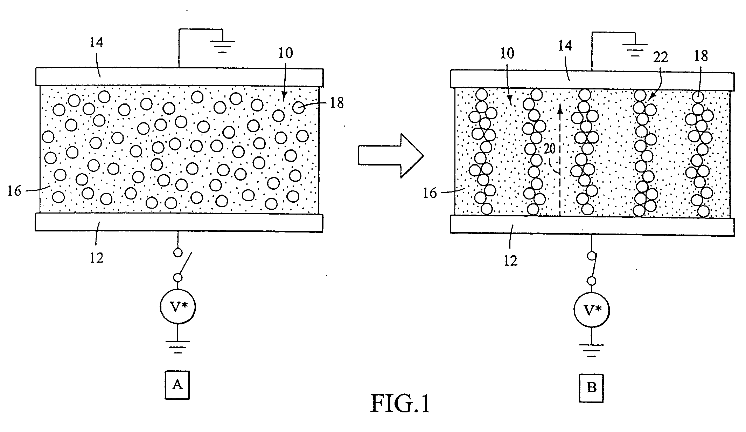

Referring to FIG. 1, the general mechanism of an ER or MR fluid is shown. The fluid 10 is located between a first 12 and a second 14 electrode. These electrodes 12, 14 may be any type of conducting material. The fluid 10 is made up of a medium 16 and a plurality of particles 18, which are reactive to either an electric charge or a magnetic field. In the off position A, the particles 18 are evenly dispersed throughout the medium 16 in a substantially random manner. In the off position A, the fluid 10 acts like a liquid, and flows freely between the electrodes 12, 14.

When the circuit is turned to the on position B, a dipole moment is introduced to the particles 18, causing them to align in the direction of the electric charge or magnetic field. An arrow 20 in FIG. 1 shows the direction of alignment. The lines 22 of particles 18 cause the fluid 10 to approach solid form and develop a thick consistency. When the electric charge or magnetic field is removed, the particles 18 return to their random arrangement and the fluid 10 becomes a liquid once again. This characteristic of ER and MR fluids allows them to be used in many mechanisms where bonding or friction is needed. However, the binding strength of the solid formed by the fluids may not be strong enough to adequately bind two surfaces together unless very large particles 18 or a very high-energy source are used.

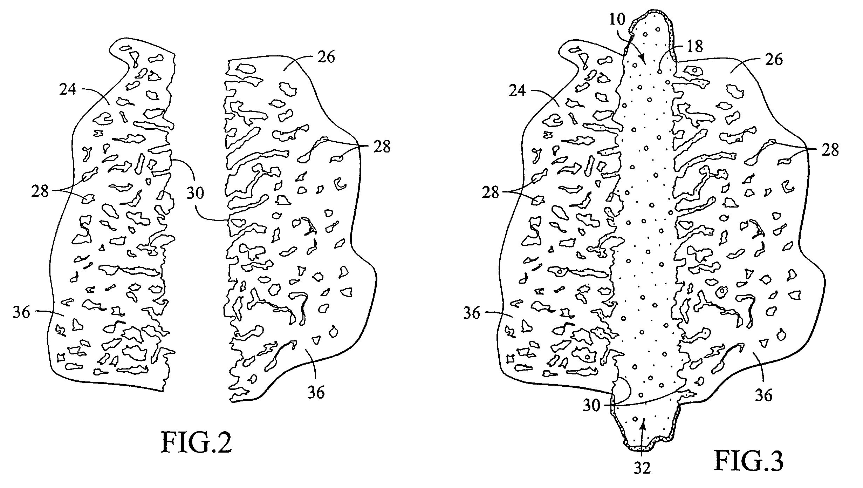

Referring to FIG. 2, this invention is first embodied as a method of using porous components 24, 26 along with ER or MR fluid to boost the binding strength of the fluid 10 without enlarging the particles 18 or increasing the amount of power used. The ER or MR fluid 10 is provided with porous components 24, 26, preferably made of powder metal with which to interact. As is well known in the art, the process of forming powder metal components 24, 26 is performed by grinding up metal into a fine powder and then pressure molding the powder back into a solid component. This process results in components 24, 26 having a multitude of pores 28 in their structure and surface 30. These pores 28 provide spaces for the ER or MR fluid 10 to be retained within the components 24, 26.

Referring to FIG. 3, the invention may be embodied in a method of having ER or MR fluid interact with the pores 28 of powder metal components 24, 26. The fluid 10 may be impregnated into the components 24, 26 by a number of different methods. The fluid 10 could be impregnated by being pulled into the pores 28 of the components 24, 26 using a vacuum or a magnetic field. Alternatively, the fluid 10 could be impregnated into the components 24, 26 by being mechanically squeezed into the pores 28 or hydraulically ingested. When the effect of any singular or combination of the above methods is removed from the fluid 10 and the components 24, 26, the fluid 10 and the particles 18 become lodged therein. A layer 32 of the ER or MR fluid may also be added between the components 24, 26.

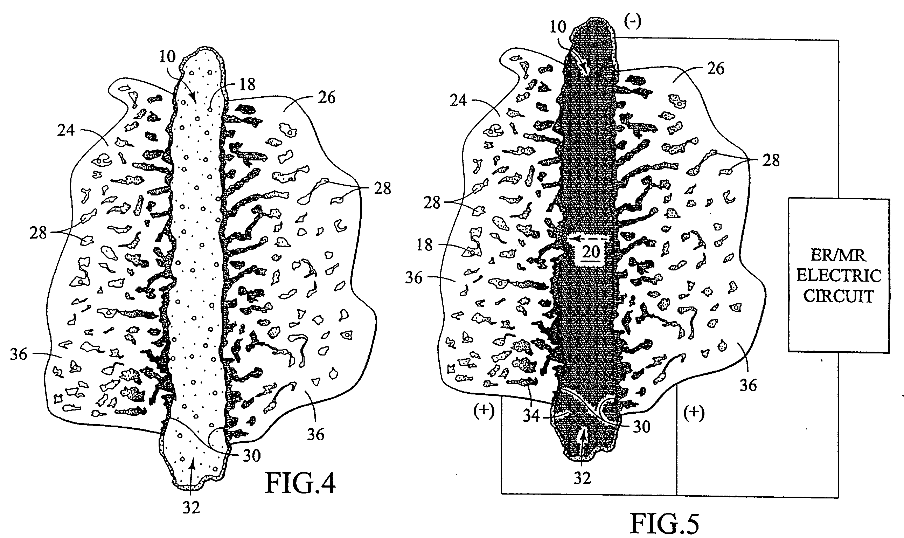

Referring in combination to FIGS. 3, 4 and 5, the mechanism of FIG. 1 is shown along with the preferred embodiment of the present invention. Preferably, powder metal components 24, 26 are impregnated with ER or MR fluid 10 such that the fluid 10 and the particles 18 are embedded within the pores 28 of the components 24, 26. In FIG. 3, the fluid 10 is in its liquid form. FIG. 4 shows the preferred embodiment of the method without a circuit present while FIG. 5 shows a schematic of a circuit attached to the components 24, 26. It is important to note that ER fluid requires an electric charge to change forms while MR fluid requires a magnetic field. The proper charge or field should be used depending on the substance impregnated within the components 24, 26. The mechanism of each type of fluid is the same when the appropriate charge or field is applied.

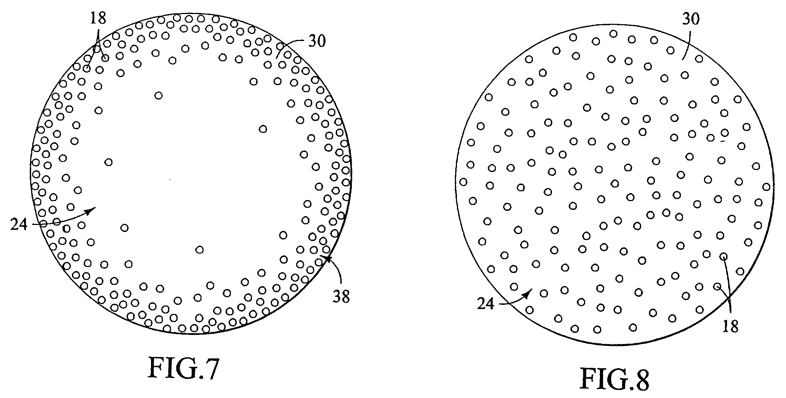

When the electric charge or magnetic field is applied to the components 24, 26 as shown in FIG. 5, the particles 18 in the fluid 10 align in the direction of the electric charge or magnetic field. An arrow 20 shows the direction of alignment. This causes the ER or MR fluid 10 to act as a solid, shown by the shaded areas 34 in FIGS. 4 and 5. FIG. 4 shows the components 24, 26 with a low threshold charge applied to them. This charge causes the particles 18 in the pores 28 and on the surface 30 to hold their position without completely solidifying. This prevents their centrifugation to the outer diameter 38 as shown in FIG. 7. As shown in FIG. 4, the charge is not great enough to solidify the layer 32 of fluid 10 in between the components 24, 26. It is only enough to hold the particles 18 in the pores 28 and on the surface 30 in place. The fact that the fluid 10 and particles 18 have been impregnated into the pores 28 of the components 24, 26 allows the fluid 10 to take advantage of the structure of the components 24, 26 and increase its binding strength. Instead of relying only on the shear strength of the fluid 10 itself, the fluid 10 forms a three-dimensional interface with the porous interior 36 of the components 24, 26. This greatly increases the bonding strength of the fluid 10 and allows for the use of smaller particles 18, less fluid 10, less dispersant, and a lower voltage electric charge or magnetic field.

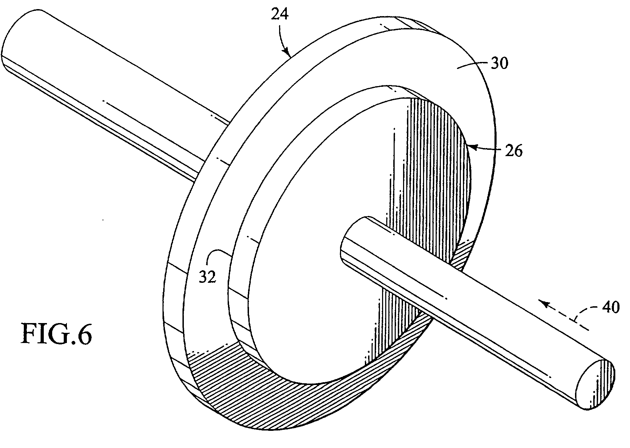

Referring to FIGS. 6, 7 and 8 in conjunction, a rotating mechanism including at least two separate components 24, 26 is shown. These components 24, 26 are in contact with each other, but normally spin individually. In order for the components 24, 26 to spin in unison, an ER or MR fluid 10 may be used to bind them together. A layer 32 of ER or MR fluid 10 as seen in FIGS. 4 and 5 is added between the rotating components 24, 26. In the prior art, when the components 24, 26 were rapidly rotated, the particles 18 of the ER or MR fluid tended to centrifuge out to the outer diameter 38 of the components 24, 26. The position of the particles 18 after centrifuging is shown in FIG. 7. This is not desirable because the particles 18 are no longer positioned in the optimal area within the components 24, 26 to interact, and the binding effect of the ER or MR fluid 10 is therefore decreased. This loss of efficiency can result in slippage between the two components 24, 26.

Using the method of the invention, a low threshold minimal modulating charge is applied to the components 24, 26 and the ER or MR fluid 10. This causes the particles in both ER and MR fluid 18 to remain substantially in their original position as shown in FIG. 8. A low threshold minimal modulating charge acts upon an MR fluid just enough to keep the particles in their original position. An electric charge will not activate the binding properties of an MR fluid, regardless of the power of the electric charge. It should also be noted that if an ER fluid is utilized, this charge could be increased in order to bind the parts together through the mechanism discussed previously. If an MR fluid is utilized, a magnetic field should be applied to bind the components 24, 26 together.

An advantage of this method is that the strong binding properties of ER and MR fluid 10 can be better utilized in rotating mechanisms. Since the particles 18 remain in place, there is no need to replenish the fluid layer 32 when the rotating components 24, 26 need to be bound together. The fluid layer 32 remains constant and can be instantaneously activated at any time without significant lag time between activation and actual binding of the components. Furthermore, the rotating components 24, 26 do not need to be moved in an axial direction 40 in order to bind them together. They can always be in close proximity with only a thin fluid layer 32 between them. This elimination of the necessity of moving the components 24, 26 simplifies the design of the mechanism and can save costs.

It should be noted that there could be a wide range of changes to the claimed method. For instance, ER or MR powder could be used instead of fluid 10. Also, any size particles 18 could be used, and the size of the pores in the components 24, 26 would have to be adequately adjusted. Any material could be used for the porous components 24, 26, not necessarily only powder metal. The circuits shown in FIGS. 1 and 5 are meant to be illustrative; the actual circuit could have any arrangement, so long as an electric charge or magnetic field is applied to the ER or MR fluid 10. Any number of rotating parts could be used with the method. Additionally, the circuit could be reversed such that when the circuit is turned off, the fluid 10 reverts to its solid form rather than its liquid form. Alternatively, the method could be used to hold an ER or MR fluid 10 in place in mechanisms that do not rotate. Thus, it is intended that the foregoing detailed description be regarded as illustrative rather than limiting and that it be understood that it is the following claims, including all equivalents, which are intended to define the scope of the invention.

## Claims

1. A method for maintaining a quantity of a magneto-rheological substance in a substantially static position in conjunction with any mechanism, said method comprising the steps of:
providing at least one porous metal component having a porosity sufficient to receive said magneto-rheological substance within a plurality of said pores;
impregnating said at least one porous metal component with said magneto-rheological substance; and
resisting the movement of said magneto-rheological substance relative to said component due to outside forces acting on said magneto-rheological substance by applying a constant minimal modulating charge to said magneto-rheological substance and said at least one porous metal component.

2. The method of claim 1, wherein said mechanism consists of at least two rotating components.

3. The method of claim 1, wherein said step of impregnating said at least one porous metal component with said magneto-rheological substance consists of removing air from the pores of said at least one porous metal component and replacing the air with said magneto-rheological substance.

4. A method for accelerating the binding properties of an electro-rheological substance in any mechanism, said method comprising the steps of:
providing at least two porous metal components each having a porosity sufficient to receive said electro-rheological substance within a plurality of said pores;
impregnating said at least two porous metal components with said electro-rheological substance;
applying a constant minimal modulating charge to said electro-rheological substance and said at least two porous metal components; and
increasing said charge applied to said electro-rheological substance such that the binding characteristics of said electro-rheological substance are activated.

5. The method of claim 4, wherein said constant minimal modulating charge is not great enough to activate the binding characteristics of said electro-rheological substance.

6. The method of claim 5, wherein said mechanism consists of at least two rotating components.

7. The method of claim 4, wherein said step of impregnating said at least two porous metal components with said electro-rheological substance consists of removing air from the pores of said at least two porous metal components and replacing said air with said electro-rheological substance.

8. A method for maintaining a homogenous film layer of a magneto-rheological substance between the components of a mechanism, said method comprising the steps of:
providing at least two porous metal components each having a porosity sufficient to receive said magneto-rheological substance within a plurality of said pores;
impregnating said at least two porous metal components with said magneto-rheological substance;
introducing a quantity of said magneto-rheological substance between said at least two porous components of said mechanism; and
applying a constant minimal modulating charge to said magneto-rheological substance and said at least two porous metal components.

9. The method of claim 8, wherein said mechanism consists of at least two rotating components.

10. The method of claim 8, wherein said step of impregnating said at least two porous metal components with said magneto-rheological substance consists of removing air from the pores of said at least two porous metal components and replacing said air with said magneto-rheological substance.

11. A method for accelerating the binding properties of a magneto-rheological substance in any mechanism, said method comprising the steps of:
providing at least two porous metal components each having a porosity sufficient to receive said magneto-rheological substance within a plurality of said pores;
impregnating said at least two porous metal components with said magneto-rheological substance;
applying a constant minimal modulating charge to said magneto-rheological substance and said at least two porous metal components; and
applying a magnetic field to said magneto-rheological substance such that the binding characteristics of said magneto-rheological substance are activated.

12. The method of claim 11, wherein said mechanism consists of at least two rotating components.

13. The method of claim 11, wherein said step of impregnating said at least two porous metal components with said magneto-rheological substance consists of removing air from the pores of said at least two porous metal components and replacing said air with said magneto-rheological substance.

14. A method for maintaining a quantity of an electro-rheological substance in a substantially static position in conjunction with any mechanism, said method comprising the steps of:
providing at least one porous metal component having a porosity sufficient to receive said electro-rheological substance within a plurality of said pores;
impregnating said at least one porous metal component with said electro-rheological substance; and
resisting the movement of said electro-rheological substance relative to said component due to outside forces acting on said electro-rheological substance by applying a constant minimal modulating charge to said electro-rheological substance and said at least one porous metal component.

15. The method of claim 14, wherein said mechanism consists of at least two rotating components.

16. The method of claim 14, wherein said step of impregnating said at least one porous metal component with said electro-rheological substance consists of removing air from the pores of said at least one porous metal component and replacing said air with said electro-rheological substance.

17. The method of claim 14, wherein said constant minimal modulating charge is not great enough to activate the binding characteristics of said electro-rheological substance.

18. A method for maintaining a homogenous film layer of an electro-rheological substance between the components of a mechanism, said method comprising the steps of:
providing at least two porous metal components each having a porosity sufficient to receive said electro-rheological substance within a plurality of said pores;
impregnating said at least two porous metal components with said electro-rheological substance;
introducing a quantity of said electro-rheological substance between said at least two porous components of said mechanism; and
applying a constant minimal modulating charge to said electro-rheological substance and said at least two porous metal components.

19. The method of claim 18, wherein said mechanism consists of at least two rotating components.

20. The method of claim 18, wherein said step of impregnating said at least two porous metal components with said electro-rheological substance consists of removing air from the pores of said at least two porous metal components and replacing said air with said electro-rheological substance.

21. The method of claim 18, wherein said constant minimal modulating charge is not great enough to activate the binding characteristics of said electro-rheological substance.
